# EUROPÄISCHE PATENTSCHRIFT

(11) **EP 0 689 951 B1**
(45) Veröffentlichungstag und Bekanntmachung des Hinweises auf die Patenterteilung: **15.09.1999**
(21) Anmeldenummer: 95109160.2
(22) Anmeldetag: 14.06.1995
(51) Int. Cl.: B60H 1/00, B60R 1/12

(54) **Einrichtung mit Innenrückblickspiegel für Kraftfahrzeuge**
Arrangement with Internal rear-view mirror for motor vehicles
Disposition rétroviseur intérieur pour véhicules automobiles

(30) Priorität: 28.06.1994 DE 9410387 U
(43) Veröffentlichungstag der Anmeldung: 03.01.1996
(73) Patentinhaber: REITTER & SCHEFENACKER GmbH & Co. KG, D-73730 Esslingen (DE)
(72) Erfinder: Waldmann, Bernd, D-73733 Esslingen (DE); Kusuma, Djuanarto, D-96472 Rödental (DE)
(74) Vertreter: Kohl, Karl-Heinz

(56) Entgegenhaltungen:
- DE-A- 3 221 612
- DE-A- 4 214 223
- DE-A- 4 305 446
- FR-A- 2 628 043
- FR-A- 2 641 243

## Beschreibung

Die Erfindung betrifft eine Einrichtung mit Innenrückblickspiegel für Kraftfahrzeuge nach dem Oberbegriff des Anspruches 1.

In einen bekannten Innenrückblickspiegel dieser Art (DE-A-42 14 223) ist ein Temperaturfühler einer Klimaanlage eingesetzt. Bei Sonneneinstrahlung tritt das Problem auf, daß die Regelung der Klimaanlage auf die durch die Sonneneinstrahlung im Kraftfahrzeug entstehende Wärme zu spät reagiert. Darüber hinaus ist es bei Innenrückblickspiegeln bekannt, einen Lichtsensor an einer Spiegelhalterung so anzubringen, daß die Wirkfläche des Lichtempfängers einen Teil einer Kontaktfläche der Spiegelhalterung an der Fahrzeugfensterscheibe bildet. Der Lichtsensor kann eine Benetzung der Windschutzscheibe durch Niederschläge feststellen. Er ermöglicht auch eine automatische Einstellung von Instrumentenbeleuchtungen in Abhängigkeit von durch die Fensterscheibe einfallendem Licht oder dient als Empfänger einer Infrarot-Fernbedienungseinrichtung für Verschlüsse des Kraftfahrzeuges.

Der Erfindung liegt die Aufgabe zugrunde, eine Einrichtung mit Innenrückblickspiegel dieser Art so auszubilden, daß die Klimaanlage so geregelt werden kann, daß trotz starker Sonneneinstrahlung eine übermäßige Erwärmung im Kraftfahrzeuginnenraum verhindert werden kann.

Diese Aufgabe wird bei der gattungsgemäßen Einrichtung mit Innenrückblickspiegel erfindungsgemäß mit den kennzeichnenden Merkmalen des Anspruches 1 gelöst.

Bei der erfindungsgemäßen Einrichtung mit Innenrückblickspiegel ist der spiegelseitige Sensor als Sonnensensor ausgebildet und an die Klimaanlage so angeschlossen, daß das vom Sensor erzeugte Signal dem Regelkreis der Klimaanlage überlagert wird. Die Klimaanlage weist den kraftfahrzeugseitigen Temperaturfühler auf, der die Innentemperatur im Kraftfahrzeug erfaßt und ein entsprechendes Ausgangssignal dem Regelkreis zuführt. Durch die Überlagerung des Signals des spiegelseitigen Sensors wird frühzeitig eine erhöhte Sonneneinstrahlung erfaßt und die Klimaanlage dementsprechend frühzeitig geregelt. Trotz starker Sonneneinstrahlung kann dadurch eine zu starke Erwärmung im Kraftfahrzeuginnenraum über einen mit einem Temperatureinstellglied einstellbaren Sollwert vermieden werden. Ohne Sonneneinstrahlung oder bei geringer Sonneneinstrahlung wird ein entsprechend schwaches Signal oder kein Signal geliefert, so daß in diesem Fall die Klimaanlage unmittelbar durch das Regelsignal geregelt wird.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher erläutert. Es zeigt:

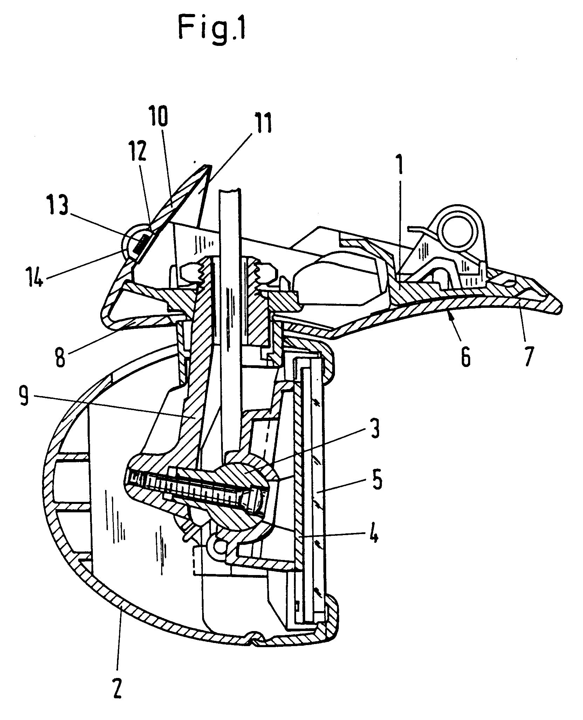

- Fig. 1: im Schnitt einen erfindungsgemäßen Innenrückblickspiegel eines Kraftfahrzeuges,
- Fig. 2: in schematischer Darstellung einen Schaltplan einer Regelung für eine Klimaanlage des Kraftfahrzeuges.

Der Innenrückblickspiegel hat einen Spiegelfuß 1, mit dem er im Kraftfahrzeug in bekannter Weise befestigt werden kann. Am Spiegelfuß 1 ist ein Spiegelgehäuse 2 mittels eines Kugelgelenkes 3 schwenkbar gelagert. Das Spiegelgehäuse 2 ist mit einem Spiegelglasträger 4 versehen, auf dem ein Spiegelglas 5 befestigt ist.

Der Spiegelfuß 1 sitzt oberhalb einer Abdeckung 6. Sie hat einen vorzugsweise am Spiegelfuß 1 einrastbaren Abdeckteil 7, der plattenförmig ausgebildet und konvex gekrümmt ist. In Höhe des Spiegelgehäuses 2 geht der Abdeckteil 7 in einen in Richtung auf die (nicht dargestellte) Windschutzscheibe verlaufenden vorderen Abdeckteil 8 über, der im Bereich oberhalb des Spiegelgehäuses 2 liegt. Durch diesen vorderen Abdeckteil 8 ragt ein Halter 9, an dem in bekannter Weise über den Splegelglasträger 4 das Spiegelgehäuse 2 gehalten ist. In Richtung auf die Windschutzscheibe geht der Abdeckteil 8 in einen aufwärts sich erstreckenden Halteteil 10 über, an dem ein als Fotodiode 13 ausgebildeter Sensor einfach montiert werden kann. Der Halteteil 10 erstreckt sich quer zur Fahrtrichtung des Kraftfahrzeuges und ist an seinen Enden mit Seitenwänden 11 versehen, die vorteilhaft rechtwinklig zum plattenförmigen Halteteil 10 sich erstrecken. Da der Halteteil 10 winklig zum Abdeckteil 8 verläuft, der den Spiegelfuß 1 nach unten abdeckt, kann die Fotodiode 13 an einer günstigen Lage an der Windschutzscheibe montiert werden. Der Halteteil 8 kann ferner in unmittelbarer Nähe der Windschutzscheibe des Kraftfahrzeuges angeordnet sein. Die Fotodiode 13 liegt dann, gegebenenfalls über die Abdeckung 6, unmittelbar an der Windschutzscheibe an und hat allenfalls nur geringen Abstand von ihr.

Der Halteteil 10 und der Abdeckteil 8 sind vorzugsweise einstückig miteinander ausgebildet, so daß die Abdeckung 6 einfach und kostengünstig gefertigt werden kann.

Der Halteteil 10 weist eine Lageröffnung 12 auf, in der die Fotodiode 13 einfach gelagert werden kann. Um die Fotodiode 13 vor Beschädigung zu schützen, liegt sie unterhalb einer für Sonnenstrahlen durchlässigen, durchsichtigen Abdeckung 14, die auf dem Halteteil 10 vorzugsweise lösbar befestigt ist. Die Fotodiode 13 ist so an der Windschutzscheibe des Kraftfahrzeuges angeordnet, daß das Sonnenlicht auf die Fotodiode fällt. Durch die Anordnung der Fotodiode 13 an der Abdeckung 6 ist die Lage der Fotodiode unabhängig von der Einstellung des Spiegelkopfes und es besteht die Möglichkeit, auch schon bestehende Innenrückblickspiegel mit der Abdeckung 6 nachzurüsten.

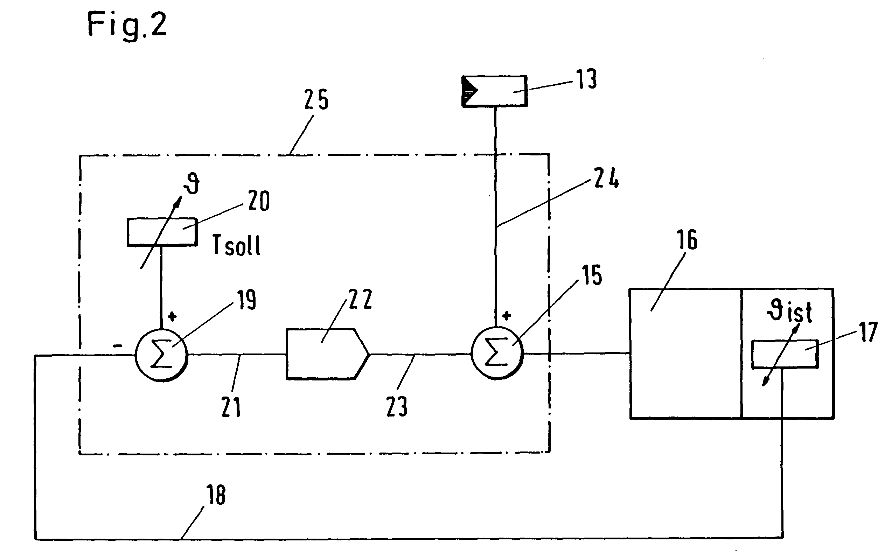

Die Fotodiode 13 ist Teil einer Regelschaltung, die anhand von Fig. 2 näher erläutert werden soll. Die Fotodiode 13 ist ein Sonnensensor, dessen Signal einem Vergleicher 15 zugeführt wird. Er ist an eine Klimaanlage 16 angeschlossen, die einen Temperaturfühler 17 aufweist. Mit ihm wird die Ist-Temperatur im Kraftfahrzeug ermittelt. Das Ist-Signal des Temperaturgliedes wird über eine Leitung 18 einem Vergleicher 19 zugeführt, der außerdem von einem Temperatureinstellglied 20 einen Temperatursollwert erhält. Solange der dem Temperaturfühler 17 zugeführte Temperatur-Istwert vom Temperatur-Sollwert abweicht, wird ein entsprechendes Differenzsignal 21 einem Regler 22 zugeführt, der ein entsprechendes Regelsignal vom Vergleicher 15 zuführt. Er erhält von der Fotodiode 13 ein der Sonneneinstrahlung entsprechendes Signal 24, das mit dem Regelsignal 23 verglichen wird. Ist die Sonneneinstrahlung stark, wird ein entsprechendes Signal 24 von der Fotodiode 13 dem Vergleicher 15 zugeführt. Der Vergleicher 15 ist so ausgebildet, daß er bei starker Sonneneinstrahlung, d.h. bei einem entsprechend großen Wert des Signals 24, die Klimaanlage 16 so steuert, daß die aufgrund der starken Sonneneinstrahlung zu erwartende Temperaturerhöhung im Kraftfahrzeuginnenraum bereits berücksichtigt wird. Das Signal 24 wird somit dem Regelsignal 23 überlagert. Würde das Regelsignal unmittelbar der Klimaanlage 16 zugeführt, würde die Temperatureinstrahlung erst verspätet berücksichtigt werden. Durch die Überlagerung des Signals 24 wird frühzeitig eine erhöhte Sonneneinstrahlung erfaßt und die Klimaanlage 16 dementsprechend frühzeitig so geregelt, daß trotz einer starken Sonneneinstrahlung eine Erwärmung im Kraftfahrzeuginnenraum über den mit dem Temperatureinstellglied 20 eingestellten Sollwert nicht erfolgt. Ist die Sonneneinstrahlung gering oder überhaupt nicht vorhanden, wird ein entsprechend schwaches Signal oder überhaupt kein Signal an den Vergleicher 15 geliefert, so daß in diesem Fall die Klimaanlage 16 unmittelbar durch das Regelsignal 23 geregelt wird.

Die Vergleicher 15, 19, das Temperatureinstellglied 20 und der Regler 22 sind in einem Steuergerät 25 untergebracht, das am Kraftfahrzeug an einer geeigneten Stelle untergebracht werden kann. Die Fotodiode 13 läßt sich einfach am Halteteil 10 der Abdeckung 6 des Spiegelfußes 1 vorsehen. Insbesondere ist die Fotodiode 13 vom Fahrzeuginnenraum nicht sichtbar, so daß sie vom Fahrer bzw. den Fahrzeuginsassen auch nicht als störend empfunden wird. Die Fotodiode 13 läßt sich an der Windschutzscheibe des Kraftfahrzeuges an einer optimalen Einbaulage anordnen, so daß die Sonneneinstrahlung über die Windschutzscheibe zuverlässig erfaßt wird. Für die Fotodiode wird der in jedem Kraftfahrzeug ohnehin vorhandene Innenrückblickspiegel als Einbauort verwendet, so daß im Fahrzeuginnenraum keine zusätzlichen Einbauorte für die Fotodiode geschaffen werden müssen. Die Fotodiode 13 läßt sich vor dem Einbau des Innenrückblickspiegels einfach montieren.

Die Abdeckung 6 ist vorteilhaft rastend mit dem Spiegelfuß 1 verbunden, so daß sie einfach montiert und im Bedarfsfall demontiert werden kann. Die elektrische Zuleitung vom Steuergerät 25 zur Fotodiode 13 kann im Kraftfahrzeuginnenraum in einfacher Weise so verlegt werden, daß sie nicht sichtbar ist.

## Patentansprüche

1. Einrichtung mit Innenrückblickspiegel für Kraftfahrzeuge, mit einem Spiegelfuß (1), der mit einem Spiegelgehäuse (2) verbunden ist, und mit mindestens einem Sensor (13), der an eine Klimaanlage (16) angeschlossen ist,
dadurch gekennzeichnet, daß der spiegelseitige Sensor (13) ein der Sonneneinstrahlung durch die Windschutzscheibe des Kraftfahrzeuges entsprechendes Signal (24) erzeugt, das einem Regelkreis der Klimaanlage (16) überlagerbar ist, die einen kraftfahrtzeugseitigen Temperaturfühler (17) aufweist, dessen Ausgangssignal dem Regelkreis zuführbar ist.

2. Einrichtung mit Innenrückblickspiegel nach Anspruch 1,
dadurch gekennzeichnet, daß der spiegelseitige Sensor (13) an einen Vergleicher (15) des Regelkreises der Klimaanlage (16) angeschlossen ist.

3. Einrichtung mit Innenrückblickspiegel nach Anspruch 1 oder 2, dadurch gekennzeichnet, daß das Ausgangssignal des Temperaturfühlers (17) einem weiteren Vergleicher (19) des Regelkreises zuführbar ist, der von einem Temperatureinstellglied (20) einen Temperatur-Sollwert erhält.

4. Einrichtung mit Innenrückblickspiegel nach Anspruch 2 oder 3, dadurch gekennzeichnet, daß zwischen den beiden Vergleichern (15, 19) ein Regler (22) angeordnet ist.

5. Einrichtung mit Innenrückblickspiegel nach einem der Ansprüche 1 bis 4, dadurch gekennzeichnet, daß der spiegelseitige Sensor (13) an einer Abdeckung (6), vorzugsweise einem Halteteil (10), der Abdeckung (6) des Spiegelfußes (1) vorgesehen ist.

6. Einrichtung mit Innenrückblickspiegel nach Anspruch 5,
dadurch gekennzeichnet, daß der spiegelseitige Sensor (13) in eine Öffnung (12) des Halteteiles (10) eingesetzt ist.

7. Einrichtung mit Innenrückblickspiegel nach einem der Ansprüche 1 bis 6, dadurch gekennzeichnet, daß der spiegelseitige Sensor (13) unter einer für Sonnenstrahlen durchlässigen, vorteilhaft aus durchsichtigem Material bestehenden Abdeckung (14) liegt.

8. Einrichtung mit Innenrückblickspiegel nach einem der Ansprüche 5 bis 7, dadurch gekennzeichnet, daß der Halteteil (10) winklig zu mindestens einem Abdeckteil (7, 8) verläuft, der den Spiegelfuß (1) nach unten abdeckt, und daß vorzugsweise der Halteteil (10) und die Abdeckung (7, 8) einstückig miteinander ausgebildet und der Halteteil (10) vom Abdeckteil (7, 8) aus aufwärts verläuft.

9. Einrichtung mit Innenruckblickspiegel nach einem der Ansprüche 5 bis 8, dadurch gekennzeichnet, daß die Abdeckung (6) rastend am Spiegelfuß (1) gehalten ist.

10. Einrichtung mit Innenrückblickspiegel nach einem der Ansprüche 1 bis 9, dadurch gekennzeichnet, daß der spiegelseitige Sensor (13) eine Fotodiode ist.

## Claims

1. An arrangement with an internal rear-view mirror for motor vehicles, comprising a mirror foot (1) connected to a mirror housing (2), and at least one sensor (13) connected to an air-conditioning installation (16), characterised in that the sensor (13) on the mirror emits a signal (24) corresponding to the sunlight passing through the windscreen of the motor vehicle and being superimposable on a control circuit of the air-conditioning installation (16) which has a temperature sensor (17) in the motor vehicle, the output signal of the temperature sensor (17) being feedable to the control circuit.

2. An arrangement with an internal rear-view mirror according to claim 1, characterised in that the sensor (13) on the mirror is connected to a comparator (15) of the control circuit of the air-conditioning installation (16).

3. An arrangement with an internal rear-view mirror according to claim 1 or 2, characterised in that the output signal of the temperature sensor (17) is feedable to a further comparator (19) of the control circuit, the comparator (19) receiving a desired temperature value from a temperature-setting device (20).

4. An arrangement with an internal rear-view mirror according to claim 2 or 3, characterised in that a controller (22) is arranged between the two comparators (15, 19).

5. An arrangement with an internal rear-view mirror according to any one of claims 1 to 4, characterised in that the sensor (13) on the mirror is provided on a cover (6), preferably on a holding member (10) of the cover (6) of the mirror foot (1).

6. An arrangement with an internal rear-view mirror according to claim 5, characterised in that the sensor (13) on the mirror is inserted into an opening (12) in the holding member (10).

7. An arrangement with an internal rear-view mirror according to any one of claims 1 to 6, characterised in that the sensor (13) on the mirror is arranged under a cover (14) penetrable by sunlight and advantageously comprising transparent material.

8. An arrangement with an internal rear-view mirror according to any one of claims 5 to 7, characterised in that the holding member (10) extends at an angle to at least one cover part (7, 8) covering the bottom of the mirror foot (1), and in that the holding member (10) and the cover (7, 8) are preferably formed integrally with one another, and the holding member (10) extends upwards from the cover part (7, 8).

9. An arrangement with an internal rear-view mirror according to any one of claims 5 to 8, characterised in that the cover (6) engages on the mirror foot (1).

10. An arrangement with an internal rear-view minor according to any one of claims 1 to 9, characterised in that the sensor (13) on the mirror is a photodiode.

## Revendications

1. Dispositif à rétroviseur intérieur pour véhicules, comportant un pied (1) de miroir qui est relié avec un boîtier (2) de miroir et au moins un capteur (13) qui est branché à une installation de climatisation, caractérisé en ce que le capteur (13) côté miroir engendre un signal (24) correspondant au rayonnement solaire à travers le pare-brise du véhicule, ledit signal étant susceptible d'être superposé à un circuit de régulation de I'installation de climatisation (16), qui présente une sonde de température (17) côté véhicule, dont le signal de sortie est susceptible d'être amené au circuit de régulation.

2. Dispositif à rétroviseur intérieur selon la revendication 1, caractérisé en ce que le capteur (13) côté miroir est branché à un comparateur du circuit de régulation de I'installation de climatisation (16).

3. Dispositif à rétroviseur intérieur selon l'une ou l'autre des revendications 1 et 2, caractérisé en ce que le signal de sortie de la sonde de température (17) est susceptible d'être amené à un autre comparateur (19) du circuit de régulation, lequel reçoit une valeur consigne de température de la part d'un organe de réglage de température (20).

4. Dispositif à rétroviseur intérieur selon l'une ou l'autre des revendications 1 et 2, caractérisé en ce qu'un régulateur (22) est agencé entre les deux comparateurs (15, 19).

5. Dispositif à rétroviseur intérieur selon l'une quelconque des revendications 1 à 4, caractérisé en ce que le capteur (13) côté miroir est prévu sur une chape (6), de préférence sur un élément support (10) de la chape (6) du pied (1) du miroir.

6. Dispositif à rétroviseur intérieur selon la revendication 5, caractérisé en ce que le capteur (13) côté miroir est mis en place dans une ouverture (12) de l'élément support (10).

7. Dispositif à rétroviseur intérieur selon l'une quelconque des revendications 1 à 6, caractérisé en ce que le capteur (13) côté miroir est agencé au-dessous d'une chape (14) laissant passer les rayons solaires, avantageusement en un matériau transparent.

8. Dispositif à rétroviseur intérieur selon l'une quelconque des revendications 5 à 7, caractérisé en ce que l'élément support (10) s'étend en angle par rapport à au moins un élément de chape (7, 8) qui recouvre le pied (1) de miroir vers le bas, et en ce que de préférence, l'élément support (10) et la chape (7, 8) sont réalisés d'une seule pièce l'un avec l'autre, et l'élément support (10) s'étend vers le haut depuis la chape (7, 8).

9. Dispositif à rétroviseur intérieur selon l'une quelconque des revendications 5 à 8, caractérisé en ce que la chape (6) est maintenue en enclenchement sur le pied (1) de miroir.

10. Dispositif à rétroviseur intérieur selon l'une quelconque des revendications 1 à 9, caractérisé en ce que le capteur (13) côté miroir est une photodiode.
